# EUROPEAN PATENT SPECIFICATION

(11) **EP 1 599 632 B1**
(45) Date of publication and mention of the grant of the patent: **21.06.2006**
(21) Application number: 04717121.0
(22) Date of filing: 04.03.2004
(51) Int. Cl.: D21H 23/78, G05D 11/00

(54) **METHOD FOR FEEDING A TREATING AGENT TO AN APPLICATION APPARATUS**
VERFAHREN ZUM ZUFÜHREN EINES BEHANDLUNGSMITTELS IN EINE AUFTRAGUNGSVORRICHTUNG
PROCEDE DE TRANSFERT D'UN AGENT DE TRAITEMENT A UN APPLICATEUR

(30) Priority: 06.03.2003 FI 20030340
(43) Date of publication of application: 30.11.2005
(73) Proprietor: Metso Paper Inc., 00130 Helsinki (FI)
(72) Inventor: VATANEN, Heikki, Järvenpää FI-04400 (FI); PITKÄNIEMI, Tapio, Järvenpää FI-04430 (FI); PÄIVÄ, Petri, Järvenpää FI-04440 (FI); LAUKKANEN, Tapio, Ylöjärvi FI-33480 (FI); LUOSTARINEN, Iiro, 3512 VW Utrecht (NL); NURMIAINEN, Timo, Järvenpää FI-04430 (FI); VIITANEN, Markku, Valkeakoski FI-37600 (FI)
(74) Representative: Kurra, Sirpa Eliina
(86) International application number: PCT/FI2004/000120
(87) International publication number: WO 2004/079093

(56) References cited:
- EP-A- 0 838 551
- US-A- 5 162 131

## Description

The invention relates to a method for feeding a treating agent to an application apparatus used for applying coating colour or surface size directly or indirectly to a paper or board web. In the method, part of the treating agent fed to the application apparatus is returned via a bypass line to the treating agent feed system and part of it is passed into an application chamber in the application apparatus, from which application chamber substantially all treating agent fed into it is applied to a moving web or to a transfer surface.

The invention relates to closed-chamber application apparatuses having essentially no return circulation. Retum circulation means the return flow of excess treating agent supplied to the application chamber via a sealing element confining the application chamber to the feed system. In film transfer coaters, for example, return circulation has traditionally amounted to about 80 % of the treating agent volume supplied to the application chamber. Return circulation causes many practical problems. In order to solve these problems, application apparatuses have been developed in which the application chamber is substantially closed, such that the treating agent can only be discharged in the form of a film applied to the applicator roll. Closed-circulation coating apparatuses include e.g. OptiSizer^{™} film transfer coater and several known curtain coaters. In closed-circulation application apparatuses the machine circulation, i.e. the treating agent feed system, is controlled such that the aim is to only feed into the application chamber the amount of the treating agent to be applied, with the addition of an amount corresponding to possible leakages from the application chamber. In addition, the coating apparatus often comprises a bypass circulation, which serves to ensure a uniform pressure and a sufficient flow in the distributor pipe feeding the treating agent into the application chamber. By means of the bypass circulation it is possible to optimize the feed profile in the cross-direction of the web and to prevent too low flow speeds around the ends of the application chamber.

When the application system operates on small circulation volumes, feed control of the treating agent becomes even more important. Supplying too much treating agent increases leakages. If too small amounts of treating agent are supplied, there's a risk of an uneven application profile.

*Finnish patent no. 104577* discloses an arrangement for feeding a treating agent to an application apparatus operating substantially without return circulation. In the arrangement a bypass flow is arranged in a feed chamber associated with the application chamber, the internal pressure of the feed chamber is measured and the feed pressure of the treating agent is adjusted such that a desired set value for the internal pressure of the feed chamber is obtained. The adjustment of the feed to correspond to actual consumption is based on pressure loss over nozzles leading to the application chamber i.e. in practice on the measurement of pressure acting before the nozzles. If is difficult to use pressure control for adjusting the amount of coating. A certain pressure renders different amounts of coating in different running conditions, since the relation between the pressure and the flow is not quite linear but influenced by many other factors as well. The pressure control of the feed is sensitive to disturbances, whose effects will have to be compensated for either automatically or by the user.

In film transfer coaters there are two main ways to adjust the amount of treating agent applied. When it is desired to change the amount, either the loading pressure of the applicator rod can be adjusted or the rod can be exchanged to a rod having a different diameter and/or different grooving. Especially when a grooved rod is concerned, only fine adjustments are obtainable by adjusting the rod loading. A further disadvantage is that the increase of loading pressure wears effectively both the grooving of the rod as well as the coating of the roll. When volumetric metering based on the groove volume of the applicator rod is used in the application, the rod has to be replaced whenever it is desired to alter the amount of treating agent applied to the roll. This is laborious, particularly on multi-grade machines.

The bypass circulation of the application apparatus has traditionally been returned to a machine tank. If the bypass circulation is not constant, it is difficult to determine the actual treating agent feed. This causes problems especially when a curtain coating apparatus is used for multilayer coating, in which it is very difficult to control the feed volume of a single layer.

An object of the invention is to provide a cost-effective and simple solution to the problems related to the feeding of treating agent and to the measurement of the feed volume.

The method according to the invention is characterized in what is presented in the characterizing part of claim 1.

The invention is based on controlling the feeding of a treating agent to an application apparatus on the basis of a treating agent flow measured from a feed line and of the desired set value of the feed. The desired value has been selected so as to provide the desired treating agent amount to a web or to a transfer surface. This kind of flow control makes it easier to measure the treating agent volume and to manage the feed. By means of flow control it is possible, for example in a film transfer coater, to adjust the amount of treating agent passed to the end product without changing the grooving of the applicator rod and such that the loading of the applicator rod is kept constant, preferably as small as possible.

In order to perform the control, the user selects the treating agent amount he wishes to have in the end product. Based on this, the necessary treating agent feed rate is calculated, when the dry solids content of the treating agent, the width of the machine and the running speed are known. The bypass circulation and leakages are taken into consideration by multiplying the amount of treating agent needed by an appropriate coefficient, which may be, for example, 1.2.

When the desired value of the feed is increased, a greater amount of treating agent is fed to the application chamber, the pressure in the application chamber increases and more treating agent is squeezed through the grooves of the applicator rod to the surface of the applicator roll. Correspondingly, decreasing the desired value of the feed leads to a thinner treating agent film.

In a preferable embodiment of the invention the bypass flow of the application apparatus is not passed to the machine tank but instead directly to the feed line at a point situated between the point of measurement of the feed flow and the application apparatus. The feeding of the treating agent to the application apparatus is thus independent of the volume of the bypass circulation. The feed pump of the machine circulation only pumps the treating agent to the application apparatus in an amount equivalent to that being transferred from the application chamber to the web or to the roll. Thanks to this arrangement it is possible to increase the bypass circulation portion, particularly when using small feed volumes, when wanting to ensure uniform pressure over the entire width of the application chamber and that the nozzle ducts leading from the distributor pipe to the application chamber do not get clogged. The feed profile can be controlled by adjusting the capacity of the bypass pump, without this having an effect on the total feed volume.

The invention will now be described by means of examples with reference to the accompanying figures.

Figure 1 is a cross-sectional view of a treating agent application apparatus associated with a film transfer coater.

Figure 2 schematically shows a machine circulation of a film transfer coater.

Figure 3 schematically shows an alternative bypass flow coupling.

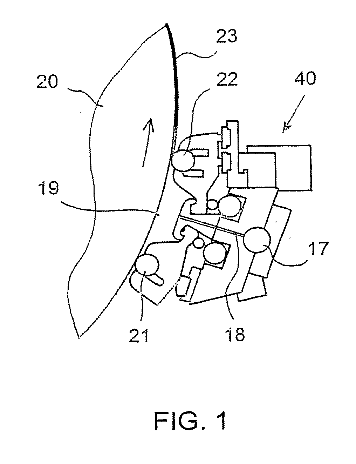

Figure 1 shows a cross-sectional view of a treating agent application apparatus 40 associated with a film transfer coater. It comprises an application chamber 19 arranged against a curved surface of an applicator roll 20. The treating agent is supplied to the application apparatus 40 via a distributor pipe 17, wherefrom it passes to the application chamber 19 via nozzle ducts 18. Part of the feed flow passed to the distributor pipe is discharged as a bypass flow through the opposite end of the pipe. The application chamber 19 is confined on the ingoing side, when seen in the direction of movement of the roll 20, by a sealing rod 21 and on the exit side by an applicator rod 22, each of which is arranged to rotate in its cradle, via which said rod 21,22 is loaded against the surface of the roll 20. The loading of the sealing rod 21 and the applicator rod 22 is controlled such that the treating agent is only able to discharge from the application chamber 19 through grooves in the applicator rod 22 as a film 23 following the surface of the applicator roll 20. The sealing rod 21 serves to prevent air from entering the application chamber 19 and the treating agent from discharging from the application chamber 19 in the upstream direction of the roll 20. Both side ends of the application chamber 19 are sealed, meaning that an overpressure can be maintained in the application chamber 19.

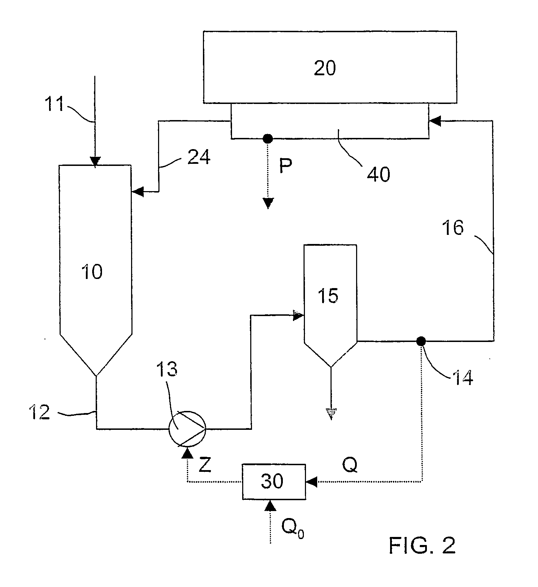

Figure 2 shows a machine circulation of a film transfer coater. A treating agent is passed along a pipeline 11 to a machine tank 10, wherefrom it is pumped by means of a feed pump 13 along a pipeline 12 to a cleaning device 15, where impurities and/or air is/are removed from it. After the cleaning device 15 the treating agent flow is passed along a feed line 16 to an application apparatus 40. The main part of the treating agent flow passed to the application apparatus 40 is passed from the distributor pipe through the application chamber to the applicator roll 20 and only a small part returns along a bypass line 24 to the machine tank 10. The bypass line 24 is usually equipped with an adjustable valve (not shown) maintaining the magnitude of the bypass flow as desired. Since there is no return circulation from the application chamber, treating agent only needs to be fed to the application chamber in an amount necessary for forming a treating agent film of the desired thickness onto the applicator roll 20.

The treating agent flow in the feed line 16 is monitored by means of a flow sensor situated at a measurement point 14. A signal Q received from the flow measurement is passed to a control circuit 30 controlling the operation of the feed pump 13. The control circuit 30 compares the actual feed flow Q to its desired set value Q₀ and produces, based on it, a control signal Z used for controlling the speed of the feed pump 13. The control circuit may alternatively be used for throttling a control valve (not shown) in the feed line 16 or for controlling the feed flow in some other way.

The application apparatus 40 can be equipped in a manner known per se with a pressure sensor measuring the pressure P in the distributor pipe or in the application chamber. In a normal situation pressure measurement is not used for controlling the feed.

When the feeding of the treating agent is controlled on the basis of the flow measurement Q and the desired value Q₀ set for the feed, it is possible to alter the treating agent volume simply by changing the desired set value of the feed Q_{0.} Thus the range of use of the grooved applicator rod 22 becomes broader, since different amounts of treating agent can be applied with it. Also, the loading of the applicator rod 22 can be kept constant and thus wear of the applicator roll 20 can be reduced. These changes increase the service life of the applicator rod 22 and applicator roll 20 and enable a longer continuous and interruption-free operation of the application apparatus 40.

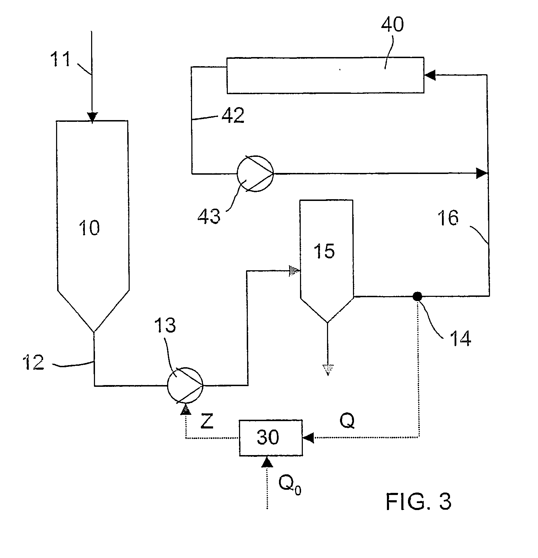

Figure 3 shows another arrangement applying the method of the invention. It should be noted that the feed system of Figure 2 as well as of Figure 3 can be used both in film transfer coating and in curtain coating. In curtain coating the treating agent is passed to a curtain coating beam situated above the web, wherefrom it is allowed to fall as a uniform curtain onto the web being treated. The feed is controlled on the basis of the flow measurement Q and the desired value Q₀ set for the feed as in the example of Figure 2.

The feed system of Figure 3 comprises a bypass line 42 equipped with a bypass pump 43, and by adjusting the speed of the pump it is possible to control the volumetric rate of the bypass circulation. The bypass flow is not passed to a machine tank 10 but instead it is passed, at a point situated after a flow measurement point 14, to a feed line 16 leading to an application apparatus 40. The bypass circulation may thus be controlled freely, since a flow loop 42 of the bypass circulation affects in no way a control circuit 30 guiding the treating agent to be fed to the application apparatus 40. Thanks to this arrangement it is, for example, possible to use a greater bypass circulation when using smaller treating agent feeds in order to ensure a uniform pressure over the entire length of the application apparatus 40 and a uniform feed profile of the application apparatus 40. This is an advantageous arrangement, when using, for example, a curtain coating beam for multi-layer coating, in which case the amount of treating agent supplied to a single treating agent layer can be very small.

The feed control system according to the invention is advantageous e.g. on multi-grade machines, in which the treating agent feed can be altered in connection with a grade change simply by changing the desired set value Q₀ of the feed. When calculating the desired value Q₀, factors affecting the amount of treating agent applied are taken into account, such factors including the speed of the coating apparatus, web width, and treating agent properties (dry solids content, viscosity, etc.).

The new way of coupling the bypass circulation shown in Figure 3 is suited to be used not only in the feed system according to the invention but also in connection with other feed control methods known as such.

## Claims

1. Method for feeding a treating agent to an application apparatus (40) used for applying coating colour or surface size directly or indirectly to a paper or board web, in which method part of the treating agent fed to the application apparatus (40) is returned via a bypass line (24, 42) to the treating agent feed system and part of it is passed into an application chamber (19) in the application apparatus (40), from which application chamber substantially all treating agent fed into it is applied to a moving web or to a transfer surface, **characterized in that** the method comprises the steps of measuring the flow of treating agent (Q) to the application apparatus (40) and controlling the feeding of the treating agent on the basis of the measured flow (Q) and of a predetermined set value (Q₀), which set value has been selected according to the desired amount of treating agent to be applied to the moving web or transfer surface.

2. Method according to claim 1, **characterized in that** the method comprises the step of returning the bypass flow to the treating agent feed system at a point situated before a feed flow measurement point (14).

3. Method according to claim 1, **characterized in that** the method comprises the step of returning the bypass flow to a treating agent feed line (16) at a point situated between a point of measurement (14) of the feed flow and the application apparatus (40).

4. Method according to any one of the preceding claims, **characterized in that** the method comprises the step of controlling the feeding of the treating agent by changing the speed of a feed pump (13).

5. Method according to claim 1-3, **characterized in that** the method comprises the step of controlling the feeding of the treating agent by throttling the flow in the feed line (16).

6. Method according to any one of the preceding claims, **characterized in that** an application beam of a film transfer coater is used as the application apparatus, in which beam a grooved applicator rod (22) is used as a metering element.

7. Method according to claim 1-5, **characterized in that** a curtain coating beam is used as the application apparatus.

## Patentansprüche

1. Verfahren zum Zuführen eines Behandlungsmittels zu einem Auftraggerät (40), das verwendet wird, um eine Beschichtungsfarbe oder einen Oberflächenleim direkt oder indirekt auf eine Papierbahn oder Kartonbahn aufzutragen, wobei bei dem Verfahren ein Teil von dem Behandlungsmittel, das zu dem Auftraggerät (40) zugeführt wird, über eine Bypassleitung (24, 42) zu dem Behandlungsmittelzuführsystem zurückkehrt und ein Teil vom ihm in eine Auftragkammer (19) in dem Auftraggerät (40) tritt, wobei aus der Auftragkammer im Wesentlichen das gesamte Behandlungsmittel, das in diese zugeführt wird, auf eine sich bewegende Bahn oder auf eine Übertragungsfläche aufgetragen wird,
**dadurch gekennzeichnet, dass**
das Verfahren die folgenden Schritte aufweist:
Messen der Strömung von dem Behandlungsmittel (Q) zu dem Auftraggerät (40) und
Steuern des Zuführens von dem Behandlungsmittel auf der Grundlage von der gemessenen Strömung (Q) und eines vorbestimmten eingestellten Wertes (Q₀), wobei der eingestellte Wert gewählt worden ist gemäß der erwünschten Menge an Behandlungsmittel, das auf die sich bewegende Bahn oder Übertragungsfläche aufgetragen wird.

2. Verfahren gemäß Anspruch 1,
**dadurch gekennzeichnet, dass**
das Verfahren den folgenden Schritt aufweist:
Zurückkehrenlassen der Bypassströmung zu dem Behandlungsmittelzuführsystem an einem Punkt, der sich vor einem Zuführströmungsmesspunkt (14) befindet.

3. Verfahren gemäß Anspruch 1,
**dadurch gekennzeichnet, dass**
das Verfahren den folgenden Schritt aufweist:
Zurückkehrenlassen der Bypassströmung zu einer Behandlungsmittelzuführleitung (16) an einem Punkt, der sich zwischen einem Messpunkt (14) der Zuführströmung und dem Auftraggerät (40) befindet.

4. Verfahren gemäß einem der vorherigen Ansprüche,
**dadurch gekennzeichnet, dass**
das Verfahren den folgenden Schritt aufweist:
Steuern des Zuführens von dem Behandlungsmittel durch Ändern der Geschwindigkeit einer Zuführpumpe (13).

5. Verfahren gemäß einem der Ansprüche 1 bis 3,
**dadurch gekennzeichnet, dass**
das Verfahren den folgenden Schritt aufweist:
Steuern des Zuführens von dem Behandlungsmittel durch Drosseln der Strömung in der Zuführleitung (16).

6. Verfahren gemäß einem der vorherigen Ansprüche,
**dadurch gekennzeichnet, dass**
ein Auftragbalken von einem Filmübertragungsbeschichter als das Auftraggerät verwendet wird, wobei bei dem Balken ein mit Nuten versehener Auftragstab (22) als ein Messelement verwendet wird.

7. Verfahren gemäß einem der Ansprüche 1 bis 5,
**dadurch gekennzeichnet, dass**
ein Curtain-Coating-Beschichtungsbalken als das Auftraggerät verwendet wird.

## Revendications

1. Procédé pour l'alimentation d'un agent de traitement dans un appareil d'application ou applicateur (40) utilisé pour appliquer une couleur de revêtement ou un produit d'encollage de surface directement ou indirectement sur une bande continue de papier ou de carton, procédé dans lequel une partie de l'agent de traitement alimenté dans l'appareil d'application (40) est renvoyée par une conduite de dérivation (24, 42) vers le système d'alimentation d'agent de traitement et une partie de celui-ci est amenée dans une chambre d'application (19) dans l'appareil d'application (40), à partir de laquelle chambre d'application sensiblement la totalité de l'agent de traitement transféré dans celle-ci est appliquée sur une bande continue en mouvement et sur une surface de transfert, **caractérisé en ce que** le procédé comprend les étapes consistant à mesurer le débit d'agent de traitement (Q) vers l'appareil d'application (40) et à commander l'alimentation de l'agent de traitement sur la base du débit mesuré (Q) et d'une valeur fixe prédéterminée (Q₀), laquelle valeur fixe a été choisie selon la quantité souhaitée d'agent de traitement à appliquer sur la bande continue en mouvement ou sur la surface de transfert.

2. Procédé selon la revendication 1, **caractérisé en ce que** le procédé comprend l'étape consistant à renvoyer le flux de dérivation dans le système d'alimentation d'agent de traitement en un point situé en amont d'un point de mesure du débit d'alimentation (14).

3. Procédé selon la revendication 1, **caractérisé en ce que** le procédé comprend l'étape consistant à renvoyer le flux de dérivation à une conduite d'alimentation d'agent de traitement (16) en un point situé entre un point de mesure (14) du débit d'alimentation et l'appareil d'application (40).

4. Procédé selon l'une quelconque des revendications précédentes, **caractérisé en ce que** le procédé comprend l'étape consistant à commander l'alimentation de l'agent de traitement en modifiant la vitesse d'une pompe d'alimentation (13).

5. Procédé selon la revendication 1-3, **caractérisé en ce que** le procédé comprend l'étape consistant à commander l'alimentation de l'agent de traitement par étranglement du flux dans la conduite d'alimentation (16).

6. Procédé selon l'une quelconque des revendications précédentes, **caractérisé en ce que** l'on utilise une poutre d'application d'un appareil de revêtement de transfert de film en tant qu'appareil d'application, poutre dans laquelle on utilise une tige d'applicateur rainurée (22) comme élément de mesure.

7. Procédé selon la revendication 1-5, **caractérisé en ce qu'**une poutre d'application en rideau est utilisée comme appareil d'application.
